# EUROPEAN PATENT SPECIFICATION

(11) **EP 3 495 247 B1**
(45) Date of publication and mention of the grant of the patent: **23.09.2020**
(21) Application number: 18206374.3
(22) Date of filing: 15.11.2018
(51) Int. Cl.: B62D 21/15, B62D 33/06, B62D 33/067

(54) **A CAB ASSEMBLY**
KABINENANORDNUNG
ENSEMBLE CABINE

(30) Priority: 06.12.2017 TR 201719698
(43) Date of publication of application: 12.06.2019
(73) Proprietor: Ford Otomotiv Sanayi Anonim Sirketi, 34885 Sancaktepe/Istanbul (TR)
(72) Inventor: YILDIRIM, Ali Can, 34885 ISTANBUL (TR); ARIK, Haluk, 34885 ISTANBUL (TR)
(74) Representative: Dericioglu, E. Korhan

(56) References cited:
- WO-A1-2006/049536
- WO-A1-2016/101030
- DE-A1-102008 003 488
- JP-A- H08 230 724
- JP-U- H0 629 987

## Description

### Technical Field

The present invention relates to a cab assembly which is to use for driver's cabs of heavy commercial vehicles and provides to dampen a portion of the energy generated when the cab is subjected to an impact.

### Prior Art

Load carrier vehicles are divided into three separate classes; light (LCV), medium (MCV) and heavy commercial vehicles (HCV) according to their load carrying capacities. Although in light commercial vehicles among these vehicles the cabin where the driver is located in the same area with the cargo carried, in the vehicles carrying medium and heavy loads, the cab and the area where the cargo is carried are separated from each other. In such vehicles, an extra cabin is designed for the driver and passengers, and the cargo and the driver are completely separated from each other. These cabins are equipped with many different comfort and safety features for the comfort and safety of the driver. One of these features is the cabin suspension formed only for the comfort and safety of the driver, which is designed different from the suspension system found in the vehicle. The cabine suspension as different from the suspension which is present in the vehicle forms an extra suspension increasing the drive comfort. In such suspension systems there are also cabine stabilizer rods used to increase the tipping resistance. The said stabilizer rod is laterally connected to the two ends of the cab and to the vehicle chassis, thereby limiting the relative movement of the cab to the vehicle. Thanks to this limitation, the tilt angle of the vehicle is decreased for the sake of driver's safety and comfort, when the vehicle turns the bends with high speed. The said suspension systems as well as the stabilizer rod are linked to the chassis by means of a tower bracket.

Nowadays, vehicle crash tests have been carried out to measure the response of vehicles in the event of an accident before they are introduced to the market. In the said tests, traffic accidents under normal traffic conditions are simulated. However, for heavy commercial vehicles serving for freight transportation, there are front crash tests available. The elements in the commercial vehicles, which perform heavy freight transportation, are designed mainly according to general driving rules and to the criteria which will provide some standarts. Heavy commercial vehicles are expected to be capable of meeting the forces and stresses that will occur during a possible accident. New crash tests with higher energy (in values of 55 kJ and 29.3 kJ) with respect to the former tests are expected to be carried out in the recently defined standarts. During these tests, reaction formers defined in the standarts crash the front of the cab with energies defined again in the standarts. The cab tends during the test to go backwards and/or to move angularly, thereby being deformed. The chassis and cab cooperate during the crash but one of them is subjected to deformation and to be forced if the other one is more resistant and stable. According to the standards, there must be a sufficient living space in the cab, in which the driver is not harmed after the collision. A rigid behavior of the vehicle chassis causes the cab to be subjected more deformation. However, this fact puts the criterion of the driver's living space at risk. Instead of this, a chassis or chassis part that can deform and de-energize will relax the cab in the sense of deformation and eliminate this risk.

In the event of a force representing the crash energy to the vehicle the cab tends to move backwards, while some of the energy is transferred to the tower bracket via the swing arm. The swing arm performs a movement in the direction of tower bracket during this energy transfer. This motion of the swing arm forces the tower bracket to perform a rotational movement. The bolts connected to the tower bracket allow the tower bracket to be connected to the chassis extension, as well as preventing the rotational movement of the tower bracket. A shearing stress occurs in the slot of tower bracket because of the bolt in the upper region of tower bracket and the tower bracket is exposed to shear stresses due to its bolts both in the said area and in the region of chassis.

In the German patent document DE2433124 (A1) according to the state of the art, a mechanism is disclosed in a detailed way, which increases the capability of damping a collision. In the said document, links are designed which moves in a slot on the chassis. This mechanism is placed into the bumper in front or back region of the vehicle and allows an enough movement, thereby providing the damping of the energy by means of deformation of the links. However the slot according to the present invention is opened in the swing arm, wherein there is also an area with a notch. This notch zone is formed in a weakened form, thereby can easily be deformed if a force is applied to the notch zone.

In the international patent application document WO2012047137 (A1) according to the state of the art, a cab suspension system and a deformation bracket is disclosed. In this study, a cavity is arranged on the cab connection bracket such that a deformation can be provided. It is stated that this cavity may be a slot or in a different form. There is a connection hole on this bracket and through this a moving part like a moving arm is connected. However, the slot according to the present invention is opened on the swing arm and the said slot has a structure, which is narrowing from one side to the other side. In this way, a serious energy damping is provided before the bolt reaches the end of the slot.

In the international patent application document WO2006049536 (A1) according to the state of the art, a cab front link and a seat floor panel chassis system is disclosed. In this study, a connecting bracket extending from the front cabin connection to the rear and with a space for weight reduction is disclosed. The cab movement arm is fixed on this part. Further, there are slots on that point of the bracket, that is extending to the chassis. However, in the present invention a slot is opened on the swing arm, which exists in the suspension system and linked to the tower bracket. Further, a notch zone is formed on the bolt side of the slot. In this way, a deformation occurs in said notch zone and damping of the force is realized, when the swing arm is subjected to a force.

In the US patent document US5564769 (A) according to the state of the art, a console support design for a vehicle is included. In this work, forms are created on the assembled complete bracket, which dampen the crash forces during a collision by deformation (flection). However, in the present invention there is a slot opened on the swing arm and the said slot has a structure, which is narrowing from one side to the other side. The swing arm having the damping slot moves in the event of an impact and a force damping is achieved by means of the bolt connecting the swing arm to the tower bracket.

Document DE 10 2008 003488 A1 discloses a cab assembly according to the preamble of claim 1.

The swing arm is equipped with a damping slot, resulting in a swing bracket which is deformable and movable in the direction of tower bracket after a possible accident / collision, thereby achieving a reduced deformation of the cab and thus eliminating the risk for criterion of driver's surviving area.

### Objects of the Invention

The object of the present invention is to realize a driver's cab assembly with a deformable swing arm.

It is an another object of the present invention to provide a driver's cab assembly for which a notch zone is formed on the swing arm.

A further object of the present invention is to realize a driver's cab assembly on whose swing arm a damping slot is opened.

A yet another object of the present invention is to realize a driver's cab assembly, wherein the slot opened on the swing arm has a structure narrowing from one side towards the other side.

### Brief Description of the Invention

The cab assembly according to the invention is defined in the independent claim, with preferred embodiments defined in the appended dependent claims.

### Detailed Description of the Invention

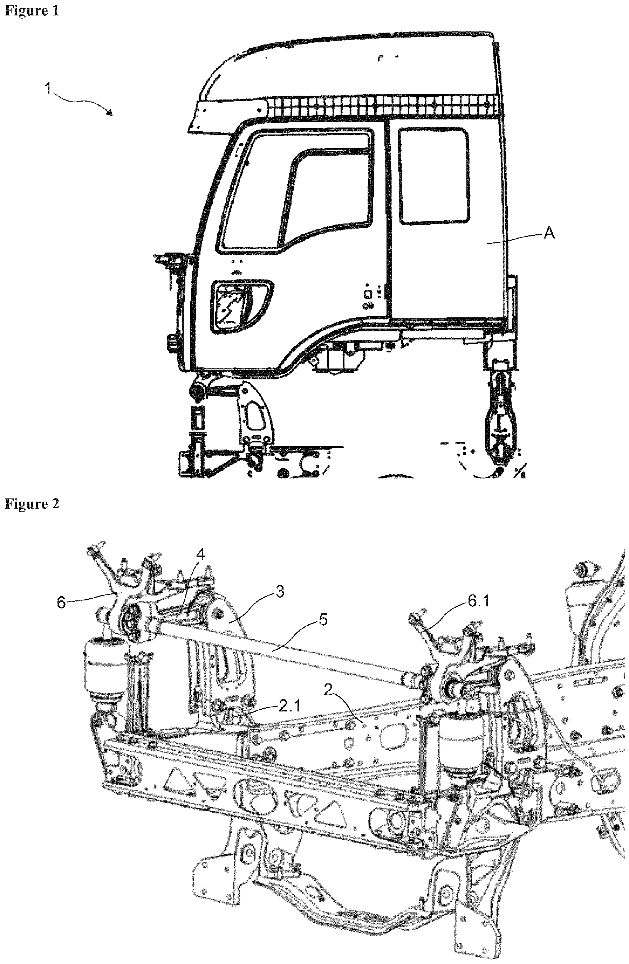

The cab assembly realized to obtain the object of the present invention is shown in the attached drawings, in which
**Figure 1** is a side view of the cab assembly.
**Figure 2** is a perspective view of the chassis, tower bracket, swing arm, linking rod and the cabin bracket.

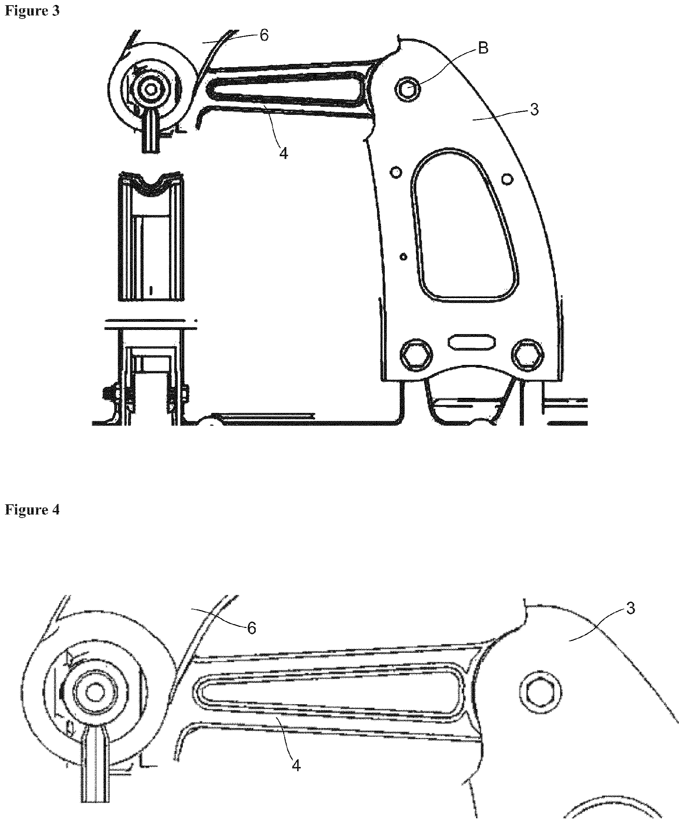

**Figure 3** is a side view of the tower bracket, the swing arm and the cabin bracket.
**Figure 4** is a zoomed in side view of the tower bracket, the swing arm and the cabin bracket.

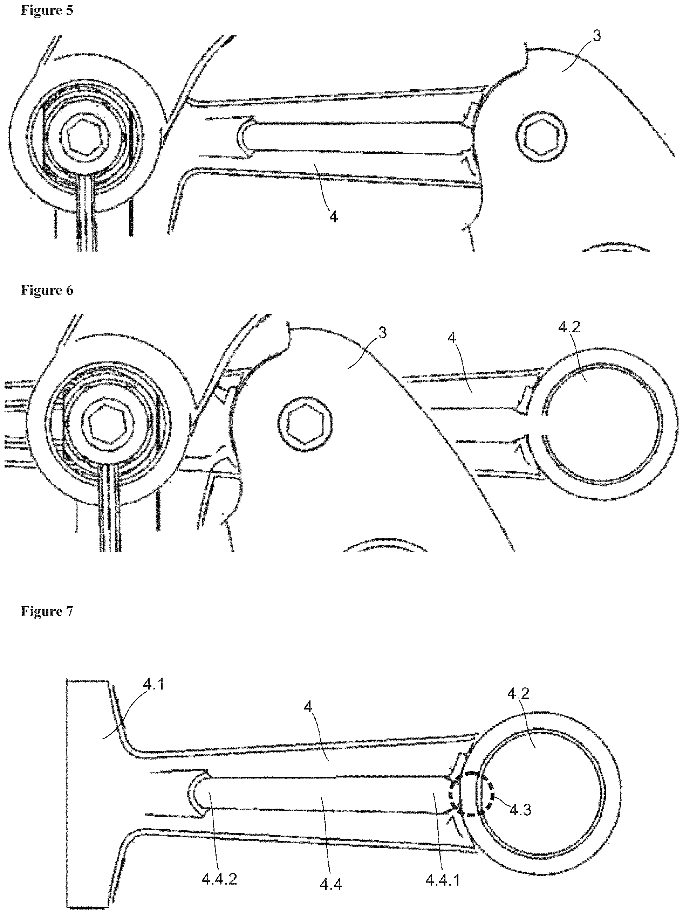

**Figure 5** is a side view of the tower bracket, the swing arm and the cabin bracket before being exposed to a force.
**Figure 6** is a side view of the tower bracket, the swing arm and the cabin bracket after being exposed to a force.
**Figure 7** is a side view of the swing arm.

The parts in the drawings are numbered individually and the corresponding numbers are given below.
**1.** Cab assembly
**2.** Chassis
   **2.1.** Extension
**3.** Tower bracket
**4.** Swing arm
   **4.1.** Linking rod connection
   **4.2.** Tower bracket connection
   **4.3.** Notch zone
   **4.4.** Damping slot
      **4.4.1.** First damping zone
      **4.4.2.** Second damping zone
**5.** Linking rod
**6.** Cabin bracket
   **6.1.** Connecting arm
**A.** Cab
**B.** Connecting element

Cab assembly (1) used for driver's cabs of heavy commercial vehicles and providing to dampen a portion of the energy generated when the cab is subjected to an impact, comprises basically,
- at least one chassis (2) comprising two arms, supporting the cab as well as the main structure,
- at least one tower bracket (3) mounted to each arm of the chassis (2) to connect the chassis (2) and the cab (A) to each other,
- at least two swing arms (4) located on that side of the tower bracket (3), that is not connected to the chassis (2) and each of them is connected to the tower bracket (3) and moves freely around its end connected to the tower bracket (3) in a direction perpendicular to the ground plane,
- at least one linking rod (5) mounted to the other end of the swing arm (4), that is not linked to the tower bracket (3), being perpendicular to the central axis of the swing arm (4) and connecting the both swing arms (4) to each other,
- at least one cabin bracket (6) mounted to the linking rod (5) and providing the connection of the cab (A) and the linking rod (5) to each other,
- at least one damping slot (4.4), which is opened along the longitudinal axis of the swing arm (4) and ensures that a connecting element (B), that connects the swing arm (4) to the tower bracket (3), can pass through it with difficulty when the swing arm (4) is exposed to a force by means of the cabin bracket (6) and thus meeting some of the said force and helping it to be damped.

In a cab assembly (1) according to an embodiment of the invention, there is a chassis (2). Said chassis (2) is in the form of a skeleton of the heavy commercial vehicle and carries the cabin and the truck. Chassis (2) is also linked to the wheels via the axle. In the chassis (2), there is an extension (2.1) preferably for mounting the tower bracket (3). There are preferably two extensions (2.1) in this embodiment of the invention and the tower bracket (3) is mounted to these extensions (2.1) by fitting.

The cab assembly (1) in an embodiment of the invention has preferably a tower bracket (3). Said tower bracket (3) is mounted at its one end to the chassis (2). Said tower bracket (3) is preferably in a position perpendicular to the ground plane. There are two tower brackets (3) in this embodiment of the invention and one of said tower brackets (3) is on one arm of the chassis (2) and the other one is on the other arm of the chassis (2). On the other end of the tower bracket (3) in the cab assembly, that is not connected to the chassis (2), there is a swing arm (4). Said swing arm (4) is connected to the tower bracket (3), wherein it is perpendicular to the ground plane and can preferably make angular movement in the preferred direction about the axis, by means of which it is connected to the tower bracket (3). Cab assembly (1) according to this embodiment of the invention has two swing arms (4), one of which is mounted on a tower bracket (3) and the other is mounted on another tower bracket (3). One end of the swing arm (4) in this embodiment of the present invention is connected to the tower bracket (3) while its other end is mounted on the linking rod (5). In this embodiment of the present invention, tehre is only one linking rod (5) allowing the two swing arms (4) located in the cab assembly (1) to be connected to each other. In other words, said linking rod (5) passes through the other ends of the swing arms (4) which are not connected to the tower bracket (3), and positioned in this way. In the cab assembly (1) according to this embodiment of the invention, the linking rod (5) is the basic connecting element and almost all elements are connected to each other by linking rod (5). Swing arm (4) according to this embodiment of the invention has a linking rod connection (4.1) as well as a tower bracket connection (4.2). Said linking rod connection (4.1) is formed, as mentioned above, to connect the swing arm (4) and the linking rod (4.1) to each other. Linking rod connection (4.1) in this embodiment of the invention is formed preferably perpendicular to the longitudinal axis of the swing arm (4) and the connection of the linking rod (5) with the swing arm (4) is realized by passing of one or more connecting elements (B) through the said linking rod connection (4.1). Linking rod connection (4.1) in this embodiment of the invention is formed on one side of the swing arm (4). On the other side of swing arm (4), on which there is no linking rod connection (4.1), a tower bracket connection (4.2) is formed. Said tower bracket connection (4.2) is formed with the intention to form the connection of swing arm (4) and tower bracket (3) to each other. Tower bracket connection (4.2) according to this embodiment of the invention is preferably formed in a circular geometrical form and its interior is empty. A connecting element (B) is passed through the tower bracket connection (4.2), and the swing arm (4) and the tower bracket (3) are connected to each other by means of said connecting element (B). A notch zone (4.3) is formed in the portion of the tower bracket connection (4.2) closest to the linking rod connection (4.1). Said notch zone (4.3) is that part where the connecting element (B), which connects the swing arm (4) to the tower bracket (3), forces it and passes through it by deforming it when the swing arm (4) is subjected to a force. When a force is exerted to the swing arm (4), the tower support (3) and the connection member (B) connected to the tower support (3) remain stationary and the swing arm (4) is forced to move. In this forced process, said connecting element (B) exerts pressure on the notch zone (4.3) and deforms the notch zone (4.3). According to the invention, there is a damping slot (4.4) between the notch zone (4.3) and the linking rod connection (4.1). The damping slot (4.4) of the invention is formed along the longitudinal axis of swing arm (4), between the notch zone (4.3) and the linking rod connection (4.1), in preferred dimensions. Damping slot (4.4) according to this embodiment of the invention has a first damping zone (4.4.1) and a second damping zone (4.4.2). In this embodiment of the invention, the part of the damping slot (4.4) on the side facing the tower bracket (3) is the first damping zone (4.4.1) and the part on the side facing the linking rod (5) is the second damping zone (4.4.2). Damping slot (4.4) according to this embodiment of the invention is preferably formed in a structure becoming narrower from the first damping zone (4.4.1) to the second damping zone (4.4.2). In this way, when a force is applied to the swing arm (4) and after the connecting element (B) located in the tower bracket connection (4.2) has deformed the notch zone (4.3) due to the applied force, said connecting element (B) moves in the damping slot (4.4) from the first damping zone (4.4.1) towards the second damping zone (4.4.2 and as a result of this movement, the force exerted to the swing arm (4) will be damped in this portion, because the width of the damping slot (4.4) changes continuously.

In the cab assembly (1) according to this embodiment of the invention, there is a cabin bracket (6) for mounting the cab (A) to the linking rod (5). Said cabin bracket (6) is provided with a hole in the middle part and through which the linking rod (5) is passed. Cab assembly (1) according to this embodiment of the invention, there are two cabin brackets (6) one of which is placed on the swing arm (4) at one end of the linking rod (5), the other one is located on the swing arm (4) at another end of the linking rod (5). In this embodiment of the invention, the cab bracket (6) has one or more connecting arms (6.1) on the side facing the cab (A). Said connecting arms (6.1) are structures formed with the intention to connect the cab (A) and and the cabin bracket (6) to each other. In the event that the connection of the cab (A) to the cabin bracket (6) is preferred, a connecting element (B) is attached to said connecting arm (6.1), whereby the connecting arm (6.1) and the cab (A) are mounted together.

A cab assembly (1) according to an embodiment of the invention operates as follows: Serious fatalities are usually experienced as a result of a frontal collision in vehicles for heavy cargo transportation. For this reason, the maximum safety of the cab (A) is of great importance. In the event of a frontal crash, the impact energy is transferred to the cab (A) and damped. During the damping of the crash energy, cab (A) and chassis (2) work simultaneously and a part of the total energy is transferred to the side of the cab (A) while the rest of it is transferred to the chassis (2) via cabin bracket (6). After the first contact of the impact energy to the cab (A), the said impact energy applies force to many parts and is finally transferred to the swing arm (4) and then to the tower bracket (3) by means of the cab bracket (6). In the event that a force is exerted to the front side of the vehicle, the cab (A) tends to move backwards and meanwhile this force is also transferred to swing arm (4). In this case, the swing arm (4) likewise tends to travel backwards with the cab (A). However, since the swing arm (4) is linked to the tower bracket (3) through the connecting element (B), it cannot move backward at first. However, if the force exerted on the cab (A) is greater than the force that is applied by the connecting element (B), which is in the tower bracket connection (4.2), to the notch zone (4.3), so the said notch zone (4.3) is exposed to a deformation and said connecting element (B) passes through the notch zone (4.3) and directed to the damping slot (4.4). The damping slot (4.4) has a structure that becomes narrower from the first damping zone (4.4.1) towards the second damping zone (4.4.2). For this reason, the force possessed by the swinging arm (4) is partially damped due to the resistance of the damping slot (4.4) while the swinging arm moves toward the end of the cabine bracket (6) to which the connecting element (B) is connected. The force of the swing arm (4) causes the connecting element (B) to move till the second damping zone (4.4.2) and if more force is applied the connecting element (B) is broken. In this process, however, the force of the swing arm (4) is seriously attenuated.

## Claims

1. Cab assembly (1) used for driver's cabs of heavy commercial vehicles and providing to dampen a portion of the energy generated when the cab is subjected to an impact, **comprising,**
- at least one chassis (2) comprising two arms, supporting the cab as well as the main structure,
- at least one tower bracket (3) mounted to each arm of the chassis (2) to connect the chassis (2) and the cab (A) to each other,
- at least two swing arms (4) located on that side of the tower bracket (3), that is not connected to the chassis (2) and each of them is connected to the tower bracket (3) and moves freely around its end connected to the tower bracket (3) in a direction perpendicular to the ground plane,
- at least one linking rod (5) mounted to the other end of the swing arm (4), that is not linked to the tower bracket (3), being perpendicular to the central axis of the swing arm (4) and connecting both swing arms (4) to each other,
- at least one cabin bracket (6) mounted to the linking rod (5) and providing the connection of the cab (A) and the linking rod (5) to each other,
**and characterized by**
- at least one damping slot (4.4), which is opened along the longitudinal axis of the swing arm (4) and ensures that a connecting element (B), that connects the swing arm (4) to the tower bracket (3), can pass through it with difficulty when the swing arm (4) is exposed to a force by means of the cabin bracket (6) and thus meeting some of the said force and helping it to be damped.

2. A cab assembly (1) as in claim 1, **characterized in that** the swing arm (4) has a linking rod connection (4.1) for connection with the linking rod (5) as well as a tower bracket connection (4.2) for connection with the tower bracket (3).

3. A cab assembly (1) as in claim 2, **characterized in that** the linking rod connection (4.1) is formed perpendicular to the longitudinal axis of swing arm (4), wherein the connection of the linking rod (5) with the swing arm (4) is realized by passing one or more connecting elements (B) through it.

4. A cab assembly (1) as in claim 2, **characterized by** a tower bracket connection (4.2) formed on the other side of the swing arm (4), on which is no linking rod connection (4.1), and providing the connection of swing arm (4) and tower bracket (3) to each other.

5. A cab assembly (1) as in claim 4, **characterized in that the** tower bracket connection (4.2) is formed in a circular geometrical form and interior of which is empty and through which a connecting element (B) is passed that connects the swing arm (4) and tower bracket (3) to each other.

6. A cab assembly (1) as in claim 4, **characterized by** a notch zone (4.3), which is formed on a part of the tower bracket connection (4.2) that is proximate to the linking rod connection (4.1) and through which the connecting element (B) connecting the swing arm (4) to the tower bracket (3) is passed by forcing and deforming it, when the swing arm (4) is exposed to a force.

7. A cab assembly (1) as in claim 2, **characterized by** a damping slot (4.4) which is formed along the longitudinal axis of swing arm (4), in a length between the notch zone (4.3) and the linking rod connection (4.1).

8. A cab assembly (1) as in claim 7, **characterized in that the** damping slot (4.4), whose part on the side facing the tower bracket (3) is the first damping zone (4.4.1) and the part on the side facing the linking rod (5) is the second damping zone (4.4.2).

9. A cab assembly (1) as in one of the claims 7 and 8, claim 1, **characterized in that** the damping slot (4.4) is formed in a structure narrowing from the first damping zone (4.4.1) to the second damping zone (4.4.2).

10. A cab assembly (1) as in claim 6, **characterized in that the** notch zone (4.3) is exposed to a deformation and thus allowing the connecting element (B) to be passed through it and to be directed toward the damping zone (4.4) when the force exerted to the cab (A) is greater than the force applied on the connecting element (B) in the tower bracket connection (4.2).

## Patentansprüche

1. Kabinenmontage (1), die für Fahrerkabinen von schweren Nutzfahrzeugen verwendet wird und einen Teil der Energie dämpft, die erzeugt wird, wenn die Kabine einem Aufprall ausgesetzt wird , **umfassend,**
- mindestens ein Fahrgestell (2) mit zwei Armen, das die Kabine sowie die Hauptstruktur trägt,
- mindestens eine Turmhalterung (3), die an jedem Arm des Fahrgestells (2) montiert ist, um das Fahrgestell (2) und die Kabine (A) miteinander zu verbinden,
- mindestens zwei Schwingen (4), die sich auf der Seite der Turmhalterung (3) befinden, die nicht mit dem Fahrgestell (2) verbunden sind, und jede von ihnen ist mit der Turmhalterung (3) verbunden und bewegt sich frei um ihr verbundenes Ende zur Turmhalterung (3) in einer Richtung senkrecht zur Grundebene,
- mindestens eine Verknüpfungsstange (5), die am anderen Ende der Schwinge (4) montiert ist und nicht mit der Turmhalterung (3) verbunden ist, senkrecht zur Mittelachse der Schwinge (4) steht und beide Schwingen (4) miteinander verbindet,
- mindestens eine Kabinenhalterung (6), die an der Verknüpfungsstange (5) montiert ist und die Verbindung der Kabine (A) und der Verknüpfungsstange (5) miteinander vorsieht,
**und dadurch gekennzeichnet, dass**
- mindestens ein Dämpfungsschlitz (4.4), der entlang der Längsachse der Schwinge (4) geöffnet ist und sicherstellt, dass ein Verbindungselement (B), das die Schwinge (4) mit der Turmhalterung (3) verbindet, diesen schwer durchdringen kann, wenn die Schwinge (4) mittels der Kabinenhalterung (6) einer Kraft ausgesetzt ist und somit einen Teil dieser Kraft aufnimmt und zu ihrer Dämpfung beiträgt.

2. Kabinenmontage (1) nach Anspruch 1, **dadurch gekennzeichnet, dass** die Schwinge (4) eine Verknüpfungsstangenverbindung (4.1) zur Verbindung mit der Verknüpfungsstange (5) sowie eine Turmhalterungsverbindung (4.2) zur Verbindung mit der Turmhalterung (3) aufweist.

3. Kabinenmontage (1) nach Anspruch 2, **dadurch gekennzeichnet, dass** die Verknüpfungsstangenverbindung (4.1) senkrecht zur Längsachse der Schwinge (4) ausgebildet ist, wobei die Verbindung der Verknüpfungsstange (5) mit der Schwinge (4) realisiert wird, indem ein oder mehrere Verbindungselemente (B) hindurchgeführt werden.

4. Kabinenmontage (1) nach Anspruch 2, **dadurch gekennzeichnet, dass** eine Turmhalterungsverbindung (4.2), die auf der anderen Seite der Schwinge (4) ausgebildet ist, an der sich keine Verknüpfungsstangenverbindung (4.1) befindet, und die die Verbindung von Schwinge (4) und Turmhalterung (3) zueinander vorsieht.

5. Kabinenmontage (1) nach Anspruch 4, **dadurch gekennzeichnet, dass** die Turmhalterungsverbindung (4.2) in einer kreisförmigen geometrischen Form ausgebildet ist, deren Inneres leer ist und durch die ein Verbindungselement (B) geführt wird, das die Schwinge (4) und Turmhalterung (3) zueinander verbindet.

6. Kabinenmontage (1) nach Anspruch 4, **dadurch gekennzeichnet, dass** eine Kerbzone (4.3), die an einem Teil der Turmhalterungsverbindung (4.2) ausgebildet ist, der sich in der Nähe der Verknüpfungsstangenverbindung (4.1) befindet und durch die das Verbindungelement (B), das die Schwinge (4) mit der Turmhalterung (3) verbindet, unter Krafteinwirkung und Verformung hindurchgeführt wird, wenn die Schwinge (4) einer Kraft ausgesetzt wird.

7. Kabinenmontage (1) nach Anspruch 2, **dadurch gekennzeichnet, dass** einen Dämpfungsschlitz (4.4), der entlang der Längsachse der Schwinge (4) in einer Länge zwischen der Kerbzone (4.3) und der Verknüpfungsstangenverbindung (4.1) ausgebildet ist.

8. Kabinenmontage (1) nach Anspruch 7, **dadurch gekennzeichnet, dass** der Dämpfungsschlitz (4.4), dessen Teil auf der der Turmhalterung (3) zugewandten Seite die erste Dämpfungszone (4.4.1) und dessen Teil auf der der Verknüpfungsstange (5) zugewandten Seite die zweite Dämpfungszone (4.4.2) ist.

9. Kabinenmontage (1) nach einem der Ansprüche 7 und 8, Anspruch 1, **dadurch gekennzeichnet, dass** der Dämpfungsschlitz (4.4) in einer Struktur ausgebildet ist, die sich von der ersten Dämpfungszone (4.4.1) zur zweiten Dämpfungszone (4.4.2) verengt.

10. Kabinenmontage (1) nach Anspruch 6, **dadurch gekennzeichnet, dass** die Kerbzone (4.3) einer Verformung ausgesetzt ist und somit das Verbindungselement (B) durch sie hindurchgeführt und in die Richtung der Dämpfungszone (4.4) geführt werden kann, wenn die auf die Kabine (A) ausgeübte Kraft größer als die auf das Verbindungselement (B) in der Turmhalterungsverbindung (4.2) ausgeübte Kraft ist.

## Revendications

1. Ensemble cabine (1) utilisé pour les cabines de conduite des véhicules utilitaires lourds et permettant d'amortir une partie de l'énergie générée lorsque la cabine est soumise à un choc, **comprenant,**
- au moins un châssis (2) comprenant deux bras, supportant la cabine ainsi que la structure principale,
- au moins un support de tour (3) monté sur chaque bras du châssis (2) pour connecter le châssis (2) et la cabine (A) l'un à l'autre,
- au moins deux bras oscillants (4) situés de ce côté du support de tour (3), qui n'est pas connecté au châssis (2) et chacun d'eux est connecté au support de tour (3) et se déplace librement autour de son extrémité connectée au support de tour (3) dans une direction perpendiculaire au plan du sol,
- au moins une barre de liaison (5) montée à l'autre extrémité du bras oscillant (4), qui n'est pas liée au support de tour (3), être perpendiculaire à l'axe central du bras oscillant (4) et connecter les deux bras oscillants (4) l'un à l'autre,
- au moins un support de cabine (6) monté sur la barre de liaison (5) et assurant la connexion de la cabine (A) et de la barre de liaison (5) entre elles,
**et caractérisé par**
- au moins une fente d'amortissement (4.4), qui est ouverte le long de l'axe longitudinal du bras oscillant (4) et assure qu'un élément de connexion (B), qui connecte le bras oscillant (4) au support de tour (3), peut la traverser avec difficulté lorsque le bras oscillant (4) est exposé à une force au moyen du support de cabine (6) et ainsi répondre à une partie de ladite force et aider à l'amortir.

2. Ensemble cabine (1) selon la revendication 1, **caractérisé en ce que** le bras oscillant (4) possède une connexion de barre de liaison (4.1) pour la connexion avec la barre de liaison (5) ainsi qu'une connexion de support de tour (4.2) pour la connexion avec le support de tour (3).

3. Ensemble cabine (1) selon la revendication 2, **caractérisé en ce que** la connexion de la barre de liaison (4.1) est formée perpendiculairement à l'axe longitudinal du bras oscillant (4), dans lequel la connexion de la barre de liaison (5) avec le bras oscillant (4) est réalisée en faisant passer un ou plusieurs éléments de connexion (B) à travers celle-ci.

4. Ensemble cabine (1) selon la revendication 2, **caractérisé en ce que** une connexion de support de tour (4.2) formée de l'autre côté du bras oscillant (4), sur laquelle ne se trouve aucune connexion de barre de liaison (4.1), et assurant la connexion du bras oscillant (4) et du support de tour (3) entre eux.

5. Ensemble cabine (1) selon la revendication 4, **caractérisé en ce que** la connexion du support de tour (4.2) est formée d'une forme géométrique circulaire et dont l'intérieur est vide et par lequel on passe un élément de connexion (B) qui connecte le bras oscillant (4) et le support de tour (3) l'un à l'autre.

6. Ensemble cabine (1) selon la revendication 4, **caractérisé en ce que** une zone d'entaille (4.3), qui est formée sur une partie de la connexion du support de tour (4.2) qui est proche de la connexion de la barre de liaison (4.1) et par lequel l'élément de connexion (B) connectant le bras oscillant (4) au support de tour (3) est passé en le forçant et en le déformant, lorsque le bras oscillant (4) est exposé à une force.

7. Ensemble cabine (1) selon la revendication 2, **caractérisé en ce que** une fente d'amortissement (4.4) qui est formée le long de l'axe longitudinal du bras oscillant (4), sur une longueur comprise entre la zone de l'entaille (4.3) et la connexion de la barre de liaison (4.1).

8. Ensemble cabine (1) selon la revendication 7, **caractérisé en ce que** la fente d'amortissement (4.4), dont la partie du côté faisant face au support de tour (3) est la première zone d'amortissement (4.4.1) et la partie située du côté de la barre de liaison (5) est la deuxième zone d'amortissement (4.4.2).

9. Ensemble cabine (1) selon l'une quelconque des revendications 7 et 8, la revendication 1, **caractérisé en ce que** la fente d'amortissement (4.4) est formée dans une structure se rétrécissant de la première zone d'amortissement (4.4.1) à la deuxième zone d'amortissement (4.4.2).

10. Ensemble cabine (1) selon la revendication 6, **caractérisé en ce que** la zone d'entaille (4.3) est exposée à une déformation et permet ainsi de faire passer l'élément de connexion (B) à travers celle-ci et de le diriger vers la zone d'amortissement (4.4) lorsque la force exercée sur la cabine (A) est supérieure à la force appliquée sur l'élément de connexion (B) dans la connexion du support de tour (4.2).
